# EUROPÄISCHE PATENTSCHRIFT

(11) **EP 3 786 008 B1**
(45) Veröffentlichungstag und Bekanntmachung des Hinweises auf die Patenterteilung: **10.08.2022**
(21) Anmeldenummer: 19194455.2
(22) Anmeldetag: 29.08.2019
(51) Int. Cl.: B60S 9/04

(54) **STÜTZE**
SUPPORT
SUPPORT

(43) Veröffentlichungstag der Anmeldung: 03.03.2021
(73) Patentinhaber: Voithofer, Paul, 4400 Steyr (AT)
(72) Erfinder: Voithofer, Paul, 4400 Steyr (AT)
(74) Vertreter: Hoefer & Partner Patentanwälte mbB

(56) Entgegenhaltungen:
- DE-A1- 4 126 085
- US-A- 3 997 143
- US-A- 4 067 543
- US-A1- 2002 008 231
- US-A1- 2007 284 499

## Beschreibung

Die vorliegende Erfindung betrifft eine Stütze. Insbesondere dient die Stütze zum Abstützen eines Wohnwagens oder Reisemobils gegenüber einem Untergrund. Außerdem betrifft die Erfindung einen Gegenstand, an dem die Stütze befestigt ist. Somit kann der Gegenstand über die Stütze gegenüber dem Untergrund abgestützt werden.

Aus dem Stand der Technik sind Fahrzeuge oder Anhänger bekannt, bei denen es für bestimmte Aktivitäten notwendig ist, dass diese einen festen Stand auf dem Untergrund aufweisen. Hierzu werden üblicherweise Stützen verwendet, durch die das Fahrzeug oder der Anhänger gegenüber dem Untergrund abstützbar ist. Generell sind Stützen bekannt, die an Gegenständen befestigt sind und, beispielsweise mittels Spindeltrieb, ausgefahren werden können, um den Gegenstand gegenüber dem Untergrund abzustützen. Derartige Stützen sind auch für ähnliche Einsatzzwecke zur Errichtung von vorübergehend genutzten Plattformen, beim Bühnenbau, bei Containerbauten und bei Mobile-Homes bekannt.

Bekannte Stützen werden zumeist aus massiven Streben gefertigt, die beispielsweise quadratische Profilelemente sein können. Eine solche Konstruktion weist einerseits ein hohes Gewicht auf, andererseits ist ein großer Raumbedarf, insbesondere zum Einfahren und Ausfahren der Stütze, notwendig. Neben diesen "Wagenheber-Stützen" sind auch "Stempel-Stützen" im Einsatz, die nach dem Ausklappen senkrecht ausgefahren werden.

Die Dokumente DE 41 26 085 A1, US 2002/008231 A1, US 3 997 143, US 4 067 543 A und US 2007/284499 A1 offenbaren Stützen nach dem Stand der Technik.

Es ist Aufgabe der Erfindung, eine Stütze bereitzustellen, die bei einfacher und kostengünstiger Herstellung und Montage einen geringen Platzbedarf und insbesondere auch ein geringes Gewicht aufweist. Gelöst wird die Aufgabe durch die Merkmale des unabhängigen Anspruchs. Die Unteransprüche haben bevorzugte Weiterbildungen der Erfindung zum Inhalt.

Somit wird die Aufgabe gelöst durch eine Stütze zum Abstützen eines Gegenstands gegenüber einem Untergrund. Bei dem Gegenstand handelt es sich besonders vorteilhaft um einen Wohnwagen. Es sind aber ebenso auch andere Gegenstände, wie beispielsweise sonstige Anhänger, Marktverkaufsfahrzeuge oder auch Plattformen, denkbar. Die Stütze gemäß der Erfindung kombiniert die Vorteile von bekannten Wagenheber-Stützen und Stempel-Stützen.

Die Stütze weist eine Kettengliedvorrichtung sowie ein Führungselement auf. Die Kettengliedvorrichtung umfasst mehrere verbundene und aneinander rotierbar gelagerte Glieder. Insbesondere sind stets zwei benachbarte Glieder relativ zueinander rotierbar aneinander gelagert. Besonders vorteilhaft ist die einzig mögliche relative Bewegung die relative Rotation der Glieder. Die Glieder lassen sich somit wahlweise in einer geradlinigen Anordnung oder in einer abgewinkelten Anordnung verwenden. Das Führungselement ist an dem Gegenstand, insbesondere dem Wohnwagen, zur Führung der Kettengliedvorrichtung befestigt und weist einen Aufbewahrungsbereich und einen an den Aufbewahrungsbereich anschließenden Umlenkbereich auf. An dem Umlenkbereich findet eine Umlenkung der Kettengliedvorrichtung relativ zu dem Aufbewahrungsbereich statt. Ein Radius des Umlenkbereichs beträgt bevorzugt zwischen 40 mm und 80 mm, insbesondere 60 mm. Somit ist insbesondere vorgesehen, dass in dem Aufbewahrungsbereich die Kettengliedvorrichtung geradlinig angeordnet ist, während in dem Umlenkbereich die Kettengliedvorrichtung umgelenkt wird. Ebenso ist möglich, dass die Kettengliedvorrichtung in dem Aufbewahrungsbereich nicht geradlinig, sondern entlang einer Kreisbahn oder einer gewinkelten Bahn angeordnet ist. Die Kettengliedvorrichtung ist vorzugsweise aus leichtem Material wie vorzugsweise gepresstem Blech oder technischem Kunststoff, besonders vorteilhaft aus Polyamid, gefertigt und weist somit ein geringes Gewicht, gleichzeitig aber eine hohe Festigkeit zur Übertragung von Abstützkräften auf.

Zumindest ein Teilbereich der Kettengliedvorrichtung ist zwischen einer Aufbewahrungsposition in dem Aufbewahrungsbereich und einer Abstützposition außerhalb des Führungselements bewegbar. Dazu ist vorgesehen, dass die Kettengliedvorrichtung das Führungselement an dem Umlenkbereich verlassen kann. Die Kettengliedvorrichtung ist somit verschiebbar, sodass der überwiegende Teil der Kettengliedvorrichtung außerhalb des Führungselements angeordnet ist. In diesem Fall befindet sich besagter Teilbereich der Kettengliedvorrichtung in der Abstützposition und kann insbesondere den Gegenstand gegenüber dem Untergrund abstützen. Wird eine Abstützfunktion nicht benötigt, so lässt sich die Kettengliedvorrichtung in die Aufbewahrungsposition überführen, wodurch zumindest ein Teilbereich der Kettengliedvorrichtung innerhalb des Aufbewahrungsbereichs des Führungselements angeordnet ist. Dabei ist vorgesehen, dass die Glieder zumindest in der Abstützposition geradlinig angeordnet sind. Dadurch ist eine Kraftübertragung zwischen den Gliedern zum Abstützen des Gegenstands zuverlässig übertragbar. Die Kettengliedvorrichtung kann außerdem in eine solche Position gebracht werden, dass sich diese teilweise in der Aufbewahrungsposition und teilweise in der Abstützposition befindet. Insbesondere verbleibt stets ein Teil der Kettengliedvorrichtung in der Aufbewahrungsposition und in der Abstützposition.

Wie bereits beschrieben, ist die Kettengliedvorrichtung eingerichtet, über den Umlenkbereich aus dem Aufbewahrungsbereich des Führungselements herausgeführt zu werden. Auf diese Weise kann die Kettengliedvorrichtung in der Abstützposition angeordnet werden. In der Abstützposition ist die Kettengliedvorrichtung gegenüber der Aufbewahrungsposition abgewinkelt. Dies bedeutet, dass die geradlinig angeordnete Kettengliedvorrichtung in der Abstützposition abgewinkelt ist gegenüber einer geradlinig angeordneten Kettengliedvorrichtung in der Aufbewahrungsposition. Ist die Kettengliedvorrichtung in der Aufbewahrungsposition nicht geradlinig angeordnet, so ist ebenfalls ein Winkel zwischen der Kettengliedvorrichtung in der Abstützposition und der Kettengliedvorrichtung in der Aufbewahrungsposition vorhanden. Ein Winkel zwischen der geradlinig angeordneten Kettengliedvorrichtung in Aufbewahrungsposition und der geradlinig angeordneten Kettenvorrichtung in Abstützposition beträgt bevorzugt maximal 110°, besonders bevorzugt 93°. Durch derartige Winkel ist eine Tragkraft vorteilhafterweise maximiert.

Die Stütze weist bevorzugt zumindest ein Verriegelungselement auf. Es kann insbesondere ein einziges Verriegelungselement vorgesehen sein, alternativ weisen sämtliche Glieder bevorzugt ein solches Verriegelungselement auf. Durch das Verriegelungselement ist ein Rotieren zweier Glieder relativ zueinander verhindert. Dies ist insbesondere dann der Fall, wenn die Glieder geradlinig angeordnet sind. Alternativ oder zusätzlich ist durch das Verriegelungselement ein Drehmoment auf die Glieder aufgebracht, das die Glieder in die geradlinige Anordnung drängt. Auf diese Weise kann die Kettengliedvorrichtung zum Kraftübertragen verwendet werden, da die Glieder eine starre Einheit bilden.

Durch die Möglichkeit der Kettengliedvorrichtung einerseits ein starres Element, andererseits ein biegeweiches Element darzustellen, ist die Stütze einfach und platzsparend aufgebaut. Außerdem sind insbesondere keine Profilelemente notwendig, die eine massive Stütze ausbilden. Somit ist die Stütze platzsparend und gewichtsarm aufgebaut. Dennoch kann eine sichere und zuverlässige Kraftübertragung zwischen Gegenstand und Untergrund erreicht werden.

Die Glieder der Kettengliedvorrichtung weisen bevorzugt einen ersten Schenkel und einen zweiten Schenkel auf. Durch ein Verbindungselement sind erster Schenkel und zweiter Schenkel verbunden und bilden insbesondere eine starre Einheit. Besonders vorteilhaft bilden erster Schenkel, zweiter Schenkel und Verbindungselement eine M-Form oder H-Form oder U-Form. Der erste Schenkel und der zweite Schenkel sind besonders vorteilhaft parallel zueinander ausgebildet. In jedem Fall ist das Verbindungselement bezüglich der Schenkel abgewinkelt. Zum Verbinden benachbarter Glieder ist vorgesehen, dass jeweils die ersten Schenkel und jeweils die zweiten Schenkel aneinander rotierbar gelagert sind. Das Verbindungselement kann eine geradlinige Kontur haben, kann aber alternativ auch gekrümmt ausgebildet sein.

Besonders bevorzugt weisen der erste Schenkel und/oder der zweite Schenkel sowohl eine zylinderförmige Erhebung als auch eine zylinderförmige Bohrung auf. Dabei ist vorgesehen, dass jede zylinderförmige Erhebung eines Glieds in eine jeweilige zylinderförmige Bohrung eines benachbarten Glieds eingreift. Auf diese Weise sind die Glieder rotierbar aneinander gelagert. Die zylinderförmige Erhebung und die zylinderförmige Bohrung bilden dabei ein Rotationslager. Zylinderförmige Erhebung und zylinderförmige Bohrung sind dazu bevorzugt komplementär ausgebildet.

Bevorzugt ist vorgesehen, dass die Verbindungselemente benachbarter Glieder aneinander anliegen, wenn die Glieder geradlinig angeordnet sind. Dies hat den Vorteil, dass auch die Verbindungselemente zur Kraftübertragung verwendet werden können, wenn die Kettengliedvorrichtung geradlinig ausgebildet ist. Somit kann die Stütze eine erhöhte Kraft zwischen Untergrund und Gegenstand übertragen und damit eine höhere Abstützkraft bereitstellen.

Eine Wandstärke des ersten Schenkels und/oder zweiten Schenkels beträgt bevorzugt zwischen 3 mm und 5 mm, insbesondere 4 mm. Eine Wandstärke des Verbindungselements beträgt bevorzugt zwischen 2 mm und 4 mm, insbesondere 3 mm. Dadurch lässt sich ein geringes Gewicht der Stütze erreichen.

Zumindest ein Teil der Glieder, insbesondere alle Glieder, weisen jeweils zumindest einen ersten Führungsbereich auf. Das Führungselement weist bevorzugt einen zweiten Führungsbereich auf, wobei erster Führungsbereich und zweiter Führungsbereich ineinandergreifen. Dadurch sind die Glieder entlang des Führungselements geführt. Somit ist ein zuverlässiges Verschieben der Kettengliedvorrichtung relativ zu dem Führungselement ermöglicht. Bei dem ersten Führungsbereich handelt es sich bevorzugt um eine Erhebung, insbesondere einen zylinderförmigen Vorsprung, bei dem zweiten Führungsbereich bevorzugt um eine Nut, in die der erste Führungsbereich eingreift. Alternativ kann auch der erste Führungsbereich eine Nut darstellen, in die der als Vorsprung ausgebildete zweite Führungsbereich eingreift. In jedem Fall ist die Kettengliedvorrichtung sicher und zuverlässig in dem Führungselement geführt.

Die Kettengliedvorrichtung weist außerdem bevorzugt ein Anfangsglied und/oder ein Endglied auf. Das Anfangsglied befindet sich insbesondere stets innerhalb des Führungselements. Das Endglied befindet sich insbesondere stets außerhalb des Führungselements. Außerdem ist an dem Endglied bevorzugt ein Fuß zum Aufsetzen auf den Untergrund befestigt. Somit ist insbesondere ein Beginn und ein Ende der Kettengliedvorrichtung definiert. Das Anfangsglied sowie das Endglied sind analog zu den sonstigen Gliedern der Kettengliedvorrichtung an dem jeweils benachbarten Glied rotierbar gelagert. Das Anfangsglied kann vorteilhafterweise zum Antreiben der Kettengliedvorrichtung zur Bewegung relativ zu dem Führungselement verwendet werden.

Besonders vorteilhaft ist das Anfangsglied an eine Gewindestange gekoppelt. Dadurch lässt sich eine Rotation der Gewindestange in eine Translation des Anfangsglieds umsetzen. Dies bedeutet, dass eine Rotation der Gewindestange zu einer Verschiebung des Anfangsglieds innerhalb des Führungselements, insbesondere innerhalb des Aufbewahrungsbereichs des Führungselements, führt. An der Gewindestange ist besonders vorteilhaft ein Drehmomentübertragungselement, beispielsweise eine Mehrkantfläche, ausgebildet, auf das ein Benutzer ein Drehmoment aufbringen kann, um die Stütze zwischen einem der Abstützposition und der Aufbewahrungsposition zu bewegen. Die Gewindestange verläuft vorteilhafterweise vollständig innerhalb des Führungselements, sodass diese vor äußeren Einflüssen geschützt ist. Besonders vorteilhaft weisen die zuvor beschriebenen Verbindungselemente der Glieder eine Krümmung auf oder sind zur Bildung einer H-Form im Wesentlichen mittig der Schenkel angeordnet, um nicht mit der Gewindestange zu interferieren.

In einer alternativen Ausgestaltung ist vorgesehen, dass ein Riemen zwischen Anfangsglied und Endglied verläuft. Der Riemen ist dazu vorteilhafterweise an dem Anfangsglied und an dem Endglied befestigt. An dem Führungselement ist eine Antriebseinheit angebracht, die insbesondere ein Elektromotor ist. Die Antriebseinheit dient zum Antreiben des Riemens, um die Kettengliedvorrichtung relativ zu dem Führungselement zu verschieben. Somit ist erreicht, dass die Stütze durch das Antriebselement selbstständig betätigt werden kann.

Vorteilhafterweise weist jedes Glied eine erste Kontaktfläche und eine zweite Kontaktfläche auf. Die erste Kontaktfläche jedes Glieds liegt bevorzugt zumindest abschnittsweise an der zweiten Kontaktfläche des benachbarten Glieds an. Es ist dabei vorgesehen, dass die erste Kontaktfläche und die zweite Kontaktfläche relativ zueinander bewegt werden, wenn die benachbarten Glieder relativ zueinander rotiert werden. Eine solche Relativbewegung der ersten Kontaktfläche und der zweiten Kontaktfläche ist durch das Verriegelungselement verhinderbar.

Besonders vorteilhaft ist die erste Kontaktfläche kreisbogenförmig um eine Rotationsachse ausgebildet. Die Rotationsachse ist diejenige Rotationsachse, um die zwei benachbarte Glieder relativ zueinander verschwenkbar sind. Die zweite Kontaktfläche ist bevorzugt abschnittsweise komplementär zu der ersten Kontaktfläche ausgebildet. Somit erfolgt ein Gleiten der ersten Kontaktfläche gegenüber der zweiten Kontaktfläche, wenn die Glieder rotiert werden. Gleichzeitig ist durch das Anliegen von erster Kontaktfläche und zweiter Kontaktfläche aufgrund der abschnittsweisen komplementären Ausgestaltung dieser Flächen eine Kraftübertragung ermöglicht. Somit kann die Kettengliedvorrichtung eine Kraftübertragung zwischen Gegenstand und Untergrund ermöglichen.

Besonders bevorzugt weist jedes Glied eine dritte Kontaktfläche und eine vierte Kontaktfläche auf. Dabei ist vorgesehen, dass die dritte Kontaktfläche eines Glieds zumindest abschnittsweise an der vierten Kontaktfläche eines benachbarten Glieds anliegt. Die erste Kontaktfläche, zweite Kontaktfläche, dritte Kontaktfläche und vierte Kontaktfläche sind dabei allesamt voneinander getrennt ausgebildet. Außerdem ist vorgesehen, dass die erste Kontaktfläche und die dritte Kontaktfläche eines Glieds an demselben benachbarten Glied anliegen. Gleiches gilt für die zweite Kontaktfläche und vierte Kontaktfläche, die ebenfalls an demselben benachbarten Glied anliegen. Besonders vorteilhaft ist vorgesehen, dass die erste Kontaktfläche und die dritte Kontaktfläche zumindest bereichsweise bezüglich der jeweiligen Rotationsachse der benachbarten Glieder gegenüberliegend ausgebildet sind. Gleiches gilt für die zweite Kontaktfläche und die vierte Kontaktfläche, die bezüglich der jeweiligen Rotationsachse ebenfalls bevorzugt zumindest bereichsweise gegenüberliegend ausgebildet sind. Durch die dritte Kontaktfläche und die vierte Kontaktfläche wird daher die Anlagefläche zwischen zwei benachbarten Gliedern weiter vergrößert. Besonders bevorzugt sind die dritte Kontaktfläche und die vierte Kontaktfläche komplementär zueinander ausgebildet. Somit ist eine Kraftübertragung im verbesserten Maße zwischen den Gliedern möglich. Dadurch kann die Kettengliedvorrichtung eine höhere Abstützkraft zum Abstützen des Gegenstands auf den Untergrund aufnehmen.

Bevorzugt ist die erste Kontaktfläche abschnittsweise von der zweiten Kontaktfläche des benachbarten Glieds zur Bildung eines Freiraums beabstandet. Außerdem weist jedes Glied ein Verriegelungselement auf. Ein Blockierbereich des Verriegelungselements kann somit in diesen Freiraum eingreifen, um eine relative Rotation zwischen den benachbarten Gliedern zu blockieren. Insbesondere ist durch das Eingreifen des Blockierbereichs in den Freiraum das relative Bewegen der ersten Kontaktfläche und der zweiten Kontaktfläche verhindert. Wird hingegen das Verriegelungselement in den freigebenden Zustand überführt, so wird insbesondere auch der Blockierbereich aus dem Freiraum heraus bewegt, sodass eine relative Bewegung von erster Kontaktfläche und zweiter Kontaktfläche ermöglicht ist.

Bevorzugt ist vorgesehen, dass der Blockierbereich des Verriegelungselements aus dem Freiraum heraus bewegbar ist, um die relative Rotation zwischen benachbarten Gliedern freizugeben. Ist der Blockierbereich aus dem Freiraum herausgedrängt, so wirkt auf das Verriegelungselement vorteilhafterweise eine den Blockierbereich in den Freiraum zurückdrängende elastische Rückstellkraft. Dies bedeutet insbesondere, dass ein zusätzliches Element elastisch verformt wird, wenn der Blockierbereich aus dem Freiraum herausbewegt wird. Dieses zusätzliche Element kann entweder Teil des Verriegelungselements oder ein externes Element sein. Durch die elastische Rückstellkraft, die den Blockierbereich in den Freiraum zurückdrängt, ist sichergestellt, dass die Blockierung der relativen Rotation benachbarter Glieder stets dann erfolgt, wenn der Blockierbereich in den Freiraum eingreifen kann. Dies ist insbesondere dann der Fall, wenn die Glieder geradlinig angeordnet sind. Sind die Glieder gegeneinander verschwenkt, so kann der Blockierbereich insbesondere nicht in den Freiraum eingreifen. Sobald die Glieder jedoch wieder geradlinig angeordnet sind, erfolgt ein Eingreifen des Blockierbereichs in den Freiraum aufgrund der Rückstellkraft.

Besonders vorteilhaft weist das Verriegelungselement einen Federarm auf. Über den Federarm ist der Blockierbereich federnd an dem Glied angebracht. Das Herausbewegen des Blockierbereichs aus dem Freiraum führt dann zu einer elastischen Verformung des Federarms, wodurch die zuvor beschriebene elastische Rückstellkraft aufgebracht wird. Der Federarm ist vorteilhafterweise distal an dem Glied angebracht, während sich der Blockierbereich insbesondere proximal an dem Federarm befindet.

Der Umlenkbereich des Führungselements weist vorteilhafterweise ein Betätigungselement auf, durch das das Verriegelungselement in einen Zustand überführbar ist, in dem die relative Rotation der Glieder freigegeben ist. Insbesondere sind die Blockierbereiche durch das Betätigungselement aus dem Freiraum herausbewegbar, was ein Umlenken der Kettengliedvorrichtung an dem Umlenkbereich durch Rotieren der Glieder relativ zueinander ermöglicht, um die unterschiedlichen Ausrichtungen von Aufbewahrungsposition und Abstützposition zu erreichen. Auf diese Weise kann durch Überführen des Verriegelungselements mittels des Betätigungselements ein Zustand erreicht werden, in dem die Kettengliedvorrichtung zumindest bereichsweise keine starre Einheit bildet, sodass ein einfaches und flexibles Führen der Kettengliedvorrichtung ermöglicht ist.

Bevorzugt ist außerdem vorgesehen, dass das Verriegelungselement einen abgeschrägten Erhebungsbereich aufweist. Der Erhebungsbereich ist von dem Betätigungselement des Führungselements verschiebbar. Dadurch kann der Blockierbereich aus dem Freiraum herausbewegt werden. Bei dem Betätigungselement handelt es sich bevorzugt um ein vorstehendes Element des Führungselements, an dem der abgeschrägte Erhebungsbereich vorbeigeführt werden muss, wenn das Glied den Umlenkbereich des Führungselements durchläuft. Somit wird durch Aufeinandertreffen von Erhebungsbereich und Betätigungselement eine elastische Verformung des Verriegelungselements erreicht, indem der Erhebungsbereich durch das Betätigungselement verschoben wird. Die abgeschrägten Flächen des Erhebungsbereichs ermöglichen ein zunehmendes Verschieben des Erhebungsbereichs bei fortwährendem Durchführen des Glieds durch den Umlenkbereich. Besonders vorteilhaft ist der Erhebungsbereich an einem distalen Ende des zuvor beschriebenen Federarms angebracht, um somit ein Verschieben des Blockierbereichs aus dem Freiraum zu ermöglichen. Besonders vorteilhaft ist der Erhebungsbereich auch distal des Blockierbereichs angeordnet. Durch den Erhebungsbereich im Zusammenwirken mit dem Betätigungselement ist somit ermöglicht, die Kettengliedvorrichtung in einen rotierbaren Zustand der Glieder relativ zueinander zu überführen, wenn die Kettengliedvorrichtung den Umlenkbereich des Führungselements durchläuft.

Jedes Glied weist bevorzugt eine Ausnehmung auf, die zur zumindest teilweisen Aufnahme des Blockierbereichs des Verriegelungselements eines benachbarten Glieds ausgebildet ist. Insbesondere kann die Ausnehmung den Blockierbereich dann aufnehmen, wenn die Glieder geradlinig orientiert sind. Greift der Blockierbereich zumindest teilweise in die Ausnehmung ein, so ist insbesondere ein Rotieren der benachbarten Glieder relativ zueinander verhindert. Somit bildet die Kettengliedvorrichtung eine starre Einheit.

Die Erfindung betrifft außerdem einen Wohnwagen und / oder ein Reisemobil. Der Wohnwagen weist zumindest eine Stütze wie zuvor beschrieben auf. Die zumindest eine Stütze dient zum Abstützen des Wohnwagens gegenüber dem Untergrund, auf dem der Wohnwagen steht. Durch die Ausgestaltung der Stütze ist diese, wie zuvor beschrieben, gewichtsarm und platzsparend. Dadurch eignet sich die Stütze optimal zur Verwendung an dem Wohnwagen. So ist insbesondere die Zuladung des Wohnwagens erhöht und ein Kraftstoffverbrauch eines Zugfahrzeugs verringert. Der Wohnwagen ist dennoch sicher und zuverlässig über die Stütze abstützbar.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Ansicht eines abzustützenden Gegenstands, hier ein Wohnwagen, gemäß einem Ausführungsbeispiel der Erfindung,
- Fig. 2: eine schematische Ansicht einer Stütze gemäß einem ersten Ausführungsbeispiel der Erfindung,
- Fig. 3: eine weitere schematische Ansicht der Stütze gemäß dem ersten Ausführungsbeispiel der Erfindung,
- Fig. 4: eine schematische Detailansicht der Stütze gemäß dem ersten Ausführungsbeispiel der Erfindung,
- Fig. 5: eine schematische Ansicht einer Kettengliedvorrichtung der Stütze gemäß dem ersten Ausführungsbeispiel der Erfindung,
- Fig. 6: eine erste schematische Detailansicht der Kettengliedvorrichtung der Stütze gemäß dem ersten Ausführungsbeispiel der Erfindung,
- Fig. 7: eine zweite schematische Detailansicht der Kettengliedvorrichtung der Stütze gemäß dem ersten Ausführungsbeispiel der Erfindung,
- Fig. 8: eine Führungsvorrichtung der Stütze gemäß dem ersten Ausführungsbeispiel der Erfindung,
- Fig. 9: eine schematische Darstellung eines Freigebens einer Blockierung der Kettengliedvorrichtung der Stütze gemäß dem ersten Ausführungsbeispiel der Erfindung,
- Fig. 10: eine schematische Darstellung einer Stütze gemäß einem zweiten Ausführungsbeispiel der Erfindung,
- Fig. 11: eine weitere schematische Darstellung der Stütze gemäß dem zweiten Ausführungsbeispiel der Erfindung,
- Fig. 12: eine schematische Darstellung einer Stütze gemäß einem dritten Ausführungsbeispiel der Erfindung,
- Fig. 13: eine schematische Darstellung einer Stütze gemäß einem vierten Ausführungsbeispiel der Erfindung,
- Fig. 14: eine schematische Darstellung eines Glieds der Stütze gemäß dem vierten Ausführungsbeispiel der Erfindung,
- Fig. 15: eine erste schematische Detailansicht der Stütze gemäß dem vierten Ausführungsbeispiel der Erfindung,
- Fig. 16: eine zweite schematische Detailansicht der Stütze gemäß dem vierten Ausführungsbeispiel der Erfindung,
- Fig. 17: eine dritte schematische Detailansicht der Stütze gemäß dem vierten Ausführungsbeispiel der Erfindung,
- Fig. 18: eine schematische Ansicht eines Anfangsglieds der Stütze gemäß dem vierten Ausführungsbeispiel der Erfindung, und
- Fig. 19: eine schematische Ansicht eines Endglieds der Stütze gemäß dem vierten Ausführungsbeispiel der Erfindung.

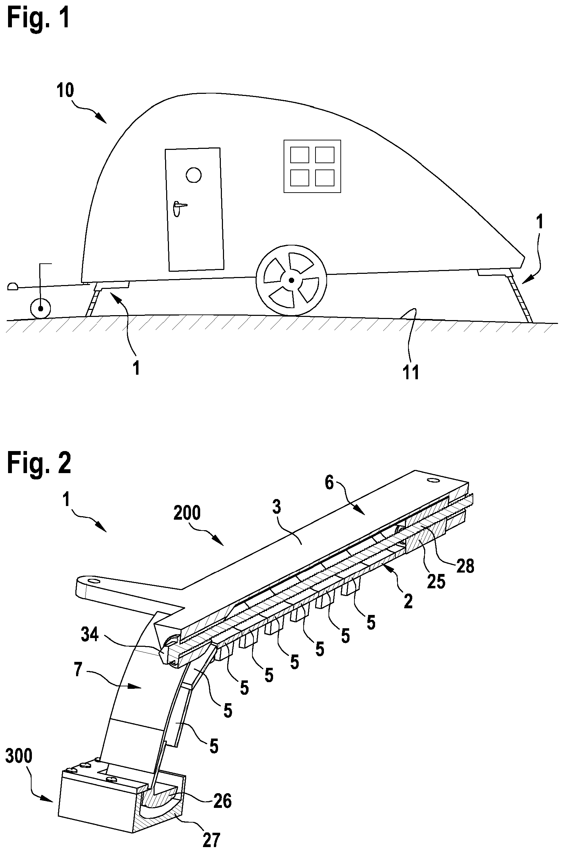

Die Figur 1 zeigt schematisch einen Wohnwagen 10, der mit einer Stütze 1 gemäß einem Ausführungsbeispiel der Erfindung abgestützt ist. Die Stütze 1 lässt sich vorteilhafterweise mit einem Wohnwagen 10 verwenden, kann aber auch für andere Gegenstände verwendet werden, um diesen Gegenstand gegenüber einem Untergrund 11 abzustützen. In dem Figur 1 gezeigten Ausführungsbeispiel ist die Stütze 1 dafür verwendet, den Wohnwagen 10 gegenüber dem Untergrund 11 abzustützen, auf dem der Wohnwagen 10 steht.

Die Stütze 1 ist insbesondere gewichtsarm und platzsparend aufgebaut. Dadurch ist erreicht, dass eine Zuladung des Wohnwagens 10 maximiert ist. Außerdem kann durch den platzsparenden Aufbau ein einfaches Einfahren und Ausfahren der Stütze erreicht werden. Insbesondere ist ein Raumbedarf zum Einfahren und Ausfahren der Stütze 1 minimiert.

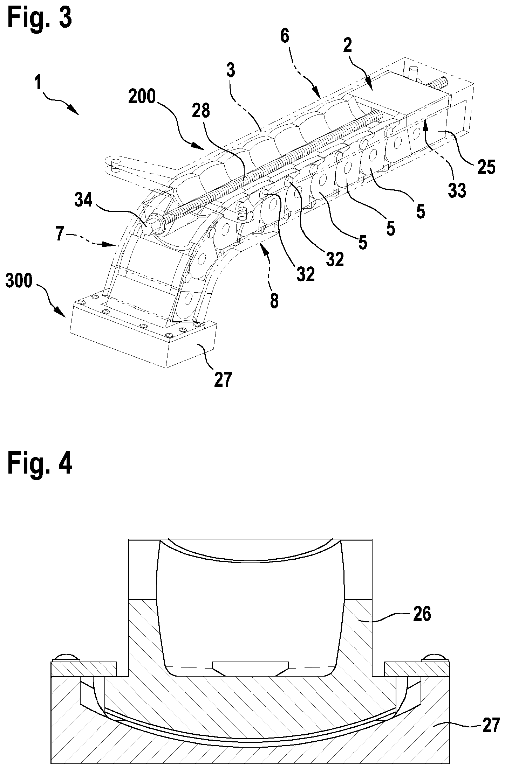

Figur 2 zeigt eine schematische Schnittansicht der Stütze 1 gemäß einem ersten Ausführungsbeispiel der Erfindung. Figur 3 zeigt eine weitere schematische Ansicht der Stütze 1 gemäß dem ersten Ausführungsbeispiel der Erfindung. Die Figuren 2 und 3 werden nachfolgend gemeinsam beschrieben.

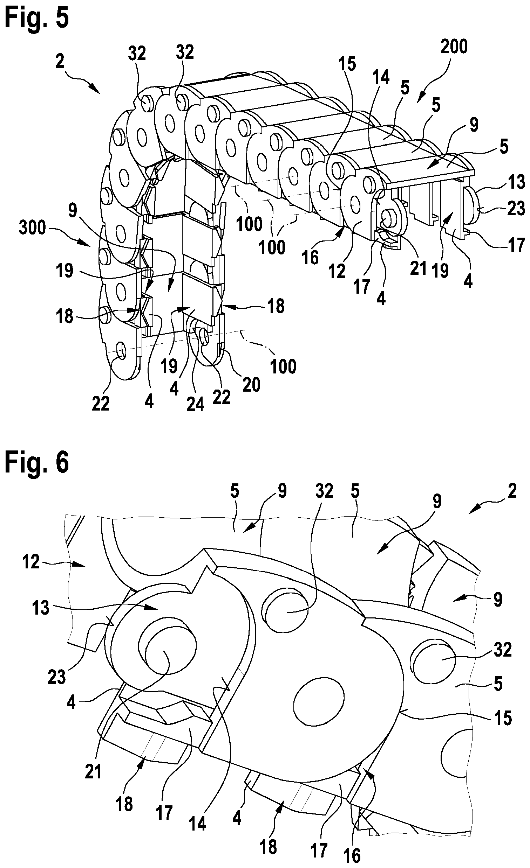

Die Stütze 1 weist ein Führungselement 3 auf, in dem eine Kettengliedvorrichtung 2 geführt ist. Die Kettengliedvorrichtung 2 weist eine Vielzahl von Gliedern 5 auf, wobei die Glieder 5 der Kettengliedvorrichtung 2 wahlweise starr und relativ zueinander rotierbar angeordnet seien können. Insbesondere sind die Glieder 5 der Kettengliedvorrichtung 2 dann starr zueinander angeordnet, wenn diese geradlinig verlaufen. Sind hingegen die Glieder 5 relativ zueinander verschwenkt, so sind diese auch nicht starr relativ zueinander. Auf diese Weise kann die Kettengliedvorrichtung 2 einerseits Kräfte übertragen, insbesondere hohe Abstützkräfte in dem Fall, in dem die Glieder 5 geradlinig und starr zueinander angeordnet sind. Andererseits kann die Kettengliedvorrichtung 2 als biegeweiches Element um Radien geführt werden, um so eine platzsparende Handhabung der Stütze 1 zu ermöglichen. Um die Glieder 5 wahlweise relativ rotierbar oder starr zueinander anzuordnen sind Verriegelungselemente 4 (siehe Figuren 5 bis 7) vorhanden, die nachfolgend mit Bezug auf die Figuren 5 bis 9 beschrieben werden.

Neben der Vielzahl von Gliedern 5 weist die Kettengliedvorrichtung 2 außerdem ein Anfangsglied 25 und ein Endglied 26 auf. Das Anfangsglied 25 und das Endglied 26 sind mit einem jeweils benachbarten Glied 5 der Kettengliedvorrichtung 2 in derselben Weise verbunden wie die Glieder 5 untereinander verbunden sind. Somit ist auch eine wahlweise relative Rotation zwischen Anfangsglied 25 und benachbartem Glied 5 sowie Endglied 26 und benachbartem Glied 5 ermöglicht, ebenso wie das starre Anordnen von Anfangsglied 25 und benachbartem Glied 5 sowie Endglied 26 und benachbartem Glied 5. In dem gezeigten ersten Ausführungsbeispiel dient das Anfangsglied 25 zum Anbinden an eine Gewindestange 28. Die Gewindestange 28 ist vollständig in dem Führungselement 3 angeordnet, wobei lediglich ein Betätigungskopf mit einem Drehmomentaufnahmebereich 34 in Form einer Mehrkantfläche außerhalb des Führungselements 3 verbleibt. Über den Drehmomentaufnahmebereich 34 kann ein Drehmoment auf die Gewindestange 28 aufgebracht werden. Eine Rotation der Gewindestange 28 ist durch das Anfangsglied 25 in eine Translation des Anfangsglieds 25 entlang des Führungselements 3 wandelbar. Somit kann durch Rotation der Gewindestange 28 eine Translation der Kettengliedvorrichtung 2 entlang des Führungselements 3 erreicht werden. Daher ist die Stütze 1 durch Rotation der Gewindestange 28 einfahrbar und ausfahrbar.

Die Kettengliedvorrichtung 2 ist durch das Führungselement 3 insbesondere auf einer gekrümmten Bahn führbar, um somit einen geringen Raumbedarf beim Einfahren und Ausfahren der Stütze 1 zu ermöglichen. Daher weist das Führungselement 3 bevorzugt einen Aufbewahrungsbereich 6 sowie einen Umlenkbereich 7 auf. In dem Aufbewahrungsbereich 6 ist bevorzugt vorgesehen, dass die Kettengliedvorrichtung 2 geradlinig angeordnet ist. In dem gezeigten Ausführungsbeispiel verläuft der Aufbewahrungsbereich 6 horizontal. Der Umlenkbereich 7 schließt an den Aufbewahrungsbereich 6 an und ermöglicht ein Umlenken der Kettengliedvorrichtung 2. Es ist außerdem vorgesehen, dass die Kettengliedvorrichtung 2 an den Umlenkbereich 7 aus dem Führungselement 3 austreten kann. Dazu ist insbesondere vorgesehen, dass die Kettengliedvorrichtung 2 beim Verlassen des Umlenkbereichs 7 geradlinig angeordnet ist, sodass insbesondere die Glieder 5 der Kettengliedvorrichtung 2 starr aneinandergekoppelt sind. Lediglich innerhalb des Umlenkbereichs 7 ist vorgesehen, dass die Glieder 5 relativ zueinander rotiert sind, um so ein Umlenken der Kettengliedvorrichtung 2 zu erreichen.

Damit kann die Stütze 1 einerseits zum Abstützen verwendet werden, da eine hohe Kraftübertragung der geradlinig angeordneten Glieder 5 ermöglicht ist, wenn sich die Kettengliedvorrichtung 2 außerhalb des Führungselements 3 befindet, andererseits kann das Führungselement 3 die Kettengliedvorrichtung 2 aufgrund des Umlenkbereichs 7 sehr platzsparend führen. Die Glieder 5 der Kettengliedvorrichtung 2 sind bevorzugt außerdem aus einem Leichtbauwerkstoff, wie gepresstem Blech oder insbesondere aus technischem Kunststoff wie Polyamid, gefertigt. Das Führungselement 3 kann vorteilhafterweise aus einem metallischen Werkstoff, insbesondere aus Aluminium, gefertigt sein. Auch hier ist die Fertigung aus Kunststoff möglich. Somit weist die Stütze 1 ein sehr geringes Gewicht auf und kann daher vorteilhafterweise an Wohnwägen 10 verwendet werden, da aufgrund des geringen Gewichts der Stütze 1 eine Zuladung des Wohnwagens 10 maximiert ist.

Die Kettengliedvorrichtung 2 ist somit relativ zu dem Führungselement 3 verschiebbar, wobei eine Bewegung der Kettengliedvorrichtung 2 insbesondere durch die Gewindestange 28 im Zusammenwirken mit dem Anfangsglied 25 initiiert wird. Aufgrund der Bewegbarkeit der Kettengliedvorrichtung 2 kann die Kettengliedvorrichtung 2 zumindest abschnittsweise in eine Aufbewahrungsposition 200 und in eine Abstützposition 300 bewegt werden. Zumindest ein Teilbereich der Kettengliedvorrichtung 2 ist zwischen der Abstützposition 300 und der Aufbewahrungsposition 200 bewegbar. Die Aufbewahrungsposition 200 befindet sich innerhalb des Aufbewahrungsbereichs 6. Die Abstützposition 300 befindet sich außerhalb des Führungselements 3. Wie aus den Figuren 2 und 3 ersichtlich ist, ist stets zumindest ein Teil der Kettengliedvorrichtung 2 in der Aufbewahrungsposition 200 angeordnet, während zumindest ein Teil der Kettengliedvorrichtung 2 in der Abstützposition 300 angeordnet ist. So verbleibt das Endglied 26 vorteilhafterweise stets in der Abstützposition 300 und somit außerhalb des Führungselements 3. Zumindest das Anfangsglied 25 verbleibt bevorzugt stets innerhalb des Führungselements 3, insbesondere innerhalb des Aufbewahrungsbereichs 6, und somit in der Aufbewahrungsposition 200. Die übrigen Glieder 5 lassen sich bevorzugt aus der Aufbewahrungsposition 200 und/oder der Abstützposition 300 herausbewegen. Der in der Aufbewahrungsposition 200 geradlinig angeordnete Bereich der Kettengliedvorrichtung 2 ist gegenüber dem sich in der Abstützposition 300 befindlichen geradlinigen Bereich der Kettengliedvorrichtung 2 abgewinkelt. In der Abstützposition 300 kann die Kettengliedvorrichtung 2 bevorzugt vertikal orientiert sein.

Um eine optimale Führung der Glieder 5, insbesondere während des Umlenkens im Umlenkbereich 7 des Führungselements 3, zu ermöglichen, ist vorgesehen, dass jedes Glied 5 zumindest einen ersten Führungsbereich 32 aufweist. Der erste Führungsbereich 32 ist in dem gezeigten Ausführungsbeispiel als zylinderförmiger Vorsprung ausgebildet. Das Führungselement 3 weist einen zweiten Führungsbereich 33 auf, der in dem gezeigten Ausführungsbeispiel als Nut ausgebildet ist. Der erste Führungsbereich 32 jedes Glieds 5 greift dabei in den zweiten Führungsbereich 33 des Führungselements 3 ein, sodass die zylinderförmigen Vorsprünge der Glieder 5 in der Nut des Führungselements 3 geführt sind. Auf diese Weise ist sichergestellt, dass die Glieder 5 optimal entlang des Führungselements 3 verlaufen.

Figur 4 zeigt schematisch das Endglied 26. An dem Endglied 26 ist ein Fuß 27 angebracht, wobei der Fuß 27 zum Kontakt mit dem Untergrund 11 ausgebildet ist. Der Fuß 27 kann insbesondere eine vergrößerte Grundfläche aufweisen, um eine Kontaktfläche zwischen Stütze 1 und Untergrund 11 zu maximieren. Insbesondere ist der Fuß 27 aus einem Material mit vergrößerte Härte gegenüber den Gliedern 5 und/oder dem Anfangsglied 25 und/oder dem Endglied 26 ausgebildet, um ein beschädigungsfreies Aufsetzen auf den Untergrund 11 zu ermöglichen. Besonders bevorzugt ist der Fuß 27 aus einem metallischen Werkstoff gefertigt.

Die Figuren 5 bis 7 zeigen einzelne Details der Verbindung der Glieder 5 der Kettengliedvorrichtung 2. Diese Figuren werden daher nachfolgend gemeinsam beschrieben.

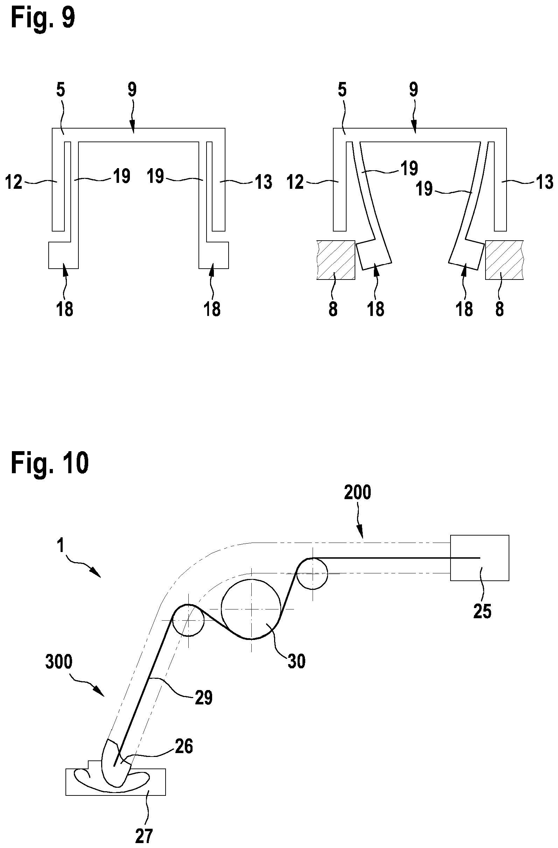

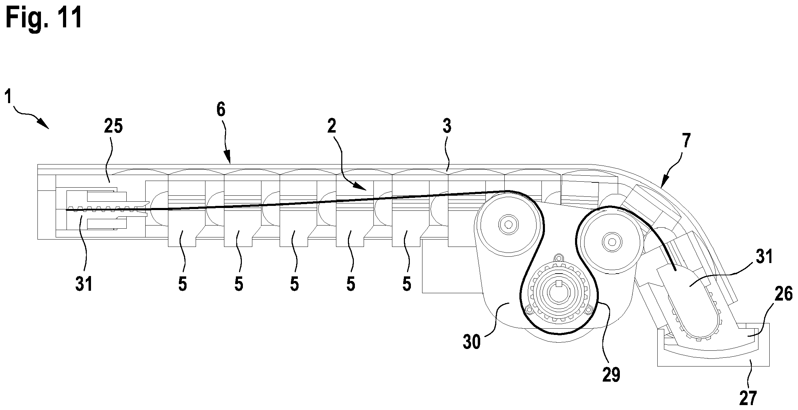

So ist vorgesehen, dass jedes Glied 5 einen ersten Schenkel 12, einen zweiten Schenkel 13, sowie einen den ersten Schenkel 12 und den zweiten Schenkel 13 verbindendes Verbindungselement 9 aufweist. In den Figuren 5 und 6 sind dabei zwei unterschiedliche Ausgestaltungen des Verbindungselements 9 gezeigt. In Figur 5 ist das Verbindungselement 9 geradlinig ausgebildet. In Figur 6 ist das Verbindungselement 9 gekrümmt ausgebildet, was insbesondere auch in den Figuren 2 und 3 gezeigt ist. Auf diese Weise kann die Gewindestange 28 in dem gekrümmten Bereich der Verbindungselemente 9 der Glieder 5 verlaufen, um sich somit durch das Führungselement 3, insbesondere durch den gesamten Aufbewahrungsbereich 6 des Führungselements 3, bis zu dem Anfangsglied 25 zu erstrecken. Die Ausgestaltung gemäß Figur 5 eignet sich besonders vorteilhaft für alternative Antriebsmethoden, die nachfolgend mit Bezug auf Figur 10 und 11 beschrieben werden.

Der erste Schenkel 12, der zweite Schenkel 13 und das Verbindungselement 9 sind im Wesentlich U-förmig angeordnet. Der erste Schenkel 12 und der zweite Schenkel 13 sind besonders vorteilhaft parallel zueinander orientiert, können in einer Alternative aber auch gewinkelt zueinander ausgewinkelt sein. In jedem Fall ist vorgesehen, dass das Verbindungselement 9 relativ zu dem ersten Schenkel 12 und dem zweiten Schenkel 13 abgewinkelt ist. Bevorzugt weisen sowohl der erste Schenkel 12 als auch der zweite Schenkel 13 den ersten Führungsbereich 32 wie zuvor beschrieben auf, um die Glieder 5 optimal in dem Führungselement 3 führen zu können.

Die jeweils benachbarten Glieder 5 der Kettengliedvorrichtung 2 sind sowohl an dem ersten Schenkel 12 als auch an dem zweiten Schenkel 13 aneinandergelagert. Die Lagerung erfolgt der Art, dass wahlweise eine starre Verbindung und eine Verschwenkbarkeit gegeben ist. Somit können benachbarte Glieder 5 entweder einen Zustand aufweisen in dem diese um eine Rotationsachse 100 verschwenkbar sind, oder einen Zustand, in dem die benachbarten Glieder 5 eine starre Einheit bilden. Dies wird erreicht durch Verriegelungselemente 4, die wahlweise zum Verriegeln und Freigeben der Relativbewegung benachbarter Glieder 5 vorgesehen sind.

Jedes Glied 5, insbesondere sowohl der erste Schenkel 12 als auch der zweite Schenkel 13 jedes Glieds 5, weist eine erste Kontaktfläche 14 und eine zweite Kontaktefläche 15 auf. Die erste Kontaktfläche 14 jedes Glieds 5 ist zumindest abschnittsweise an der zweiten Kontaktfläche 15 eines benachbarten Glieds 5 angelegt. Ebenso ist die erste Kontaktfläche 14 jedes Glieds 5 von besagter zweiten Kontaktfläche 15 des benachbarten Glieds 5 abschnittsweise zur Bildung eines Freiraums 16 beabstandet. Ein Blockierbereich 17 des Verriegelungselements 4 kann in den Freiraum 16 eingreifen. Außerdem ist vorgesehen, dass jedes Glied 5, insbesondere sowohl der erste Schenkel 12 als auch der zweite Schenkel 13 jedes Glieds 5, jeweils eine Ausnehmung 20 aufweist, die zur zumindest teilweisen Aufnahme des Blockierbereichs 17 des Verriegelungselements 4 des benachbarten Glieds 5 ausgebildet ist, wenn die Glieder 5 geradlinig orientiert sind. Durch das Eingreifen des Blockierbereichs 17 in den Freiraum 16, und insbesondere auch in die Ausnehmung 20, ist erreicht, dass eine relative Rotation benachbarter Glieder 5 um die jeweilige Rotationsachse 100 verhindert ist. Somit bilden die benachbarten Glieder 5 eine starre Einheit. Dies ist insbesondere dann der Fall, wenn die Glieder 5 geradlinig angeordnet sind. Somit kann die Kettengliedvorrichtung 2 in diesem Zustand zur Übertragung von hohen Abstützkräften verwendet werden. Durch entsprechende Ausgestaltung der ersten Kontaktfläche 14 und/oder zweiten Kontaktfläche 15 kann auf die Ausnehmung 20 auch verzichtet werden.

Die erste Kontaktfläche 14 und die zweite Kontaktfläche 15 sind bevorzugt zumindest abschnittsweise komplementär zueinander ausgebildet. Insbesondere handelt es sich bei der ersten Kontaktfläche 14 und der zweiten Kontaktfläche 15 um eine kreisbogenförmige Fläche, beispielsweise mit einem Radius von 30 mm. Dadurch ist, unabhängig von einer Verschwenkung der benachbarten Glieder 5 stets ein maximaler Kontaktbereich zwischen der ersten Kontaktfläche 14 und der zweiten Kontaktfläche 15 vorhanden. Dadurch lassen sich hohe Abstützkräfte übertragen.

Zum weiteren Erhöhen der übertragbaren Kräfte zwischen benachbarten Gliedern 5 ist außerdem vorgesehen, dass jedes Glied 5, insbesondere sowohl der erste Schenkel 12 als auch der zweite Schenkel 13 jedes Glieds 5, eine dritte Kontaktfläche 23 und eine vierte Kontaktfläche 24 aufweist. Dabei ist wiederum vorgesehen, dass die dritte Kontaktfläche 23 jedes Glieds 5, insbesondere jedes Schenkels 12, 13, zumindest abschnittsweise an der vierten Kontaktfläche 24 des benachbarten Glieds 5, insbesondere wiederum des jeweiligen Schenkels 12, 13, anliegt. Auch die dritte Kontaktfläche 23 und die vierte Kontaktfläche 24 sind gekrümmte, insbesondere kreisbogenförmige, Flächen. Somit ist auch hier ein maximaler Kontaktbereich erreicht, der wiederum zum Übertragen hoher Kräfte verwendet werden kann. Die erste Kontaktfläche 14, die zweite Kontaktfläche 15, die dritte Kontaktfläche 23 und die vierte Kontaktfläche 24 jedes Glieds 5, insbesondere jedes Schenkels 12, 13, sind bevorzugt getrennt voneinander ausgebildet. Die erste Kontaktfläche 14 und die dritte Kontaktfläche 23 sind besonders vorteilhaft relativ zu der jeweiligen Rotationsachse 100 zumindest bereichsweise gegenüberliegend angeordnet. Gleiches gilt für die zweite Kontaktfläche 15 und die vierte Kontaktfläche 24, die ebenfalls relativ zu der jeweiligen Rotationsachse 100 zumindest bereichsweise gegenüberliegend angeordnet sind. Diese Rotationsachsen 100 sind unterschiedlich, da die erst Kontaktfläche 14 und die dritte Kontaktfläche 23 eines Glieds 5, insbesondere eines Schenkels 12, 13 des Glieds 5, an einem anderen benachbarten Glied 5 anliegen, als die zweite Kontaktfläche 15 und die vierte Kontaktfläche 24.

Wie zuvor beschrieben sind die erste Kontaktfläche 14 und die zweite Kontaktfläche 15 vorteilhafterweise zumindest bereichsweise komplementär zueinander ausgebildet. Gleiches gilt für die dritte Kontaktfläche 23 und die vierte Kontaktfläche 24, die vorteilhafterweise ebenfalls zumindest bereichsweise komplementär zueinander ausgebildet sind. Somit ist ein großer Kontaktbereich zwischen benachbarten Gliedern 5 vorhanden, da jeweils die erste Kontaktfläche 14 und die zweite Kontaktfläche 15 sowie die dritte Kontaktfläche 23 und die vierte Kontaktfläche 24 benachbarter Glieder 5 aneinander liegen. Da sowohl der erste Schenkel 12 als auch der zweite Schenkel 13 jeweils die entsprechenden Kontaktflächen 14, 15, 23, 24 aufweisen, liegt somit jedes Glied 5 mit jeweils zwei ersten Kontaktflächen 14 an zwei zweiten Kontaktflächen 15 des benachbarten Glieds an, während jeweils zwei dritte Kontaktflächen 23 an zwei vierten Kontaktflächen 24 des benachbarten Glieds 5 anliegen. Zur zusätzlichen Erhöhung der Kraftübertragungskapazität der Kettengliedvorrichtung 2 ist außerdem vorgesehen, dass die Verbindungselemente 9 aneinander anliegen, wenn die Kettengliedvorrichtung 2 geradlinig ausgebildet ist. Somit kann insbesondere in der Abstützposition 300 der Kettengliedvorrichtung 2 eine große Abstützkraft zwischen Untergrund 11 und Wohnwagen 10 übertragen werden.

Sowohl der erste Schenkel 12 als auch der zweite Schenkel 13 weisen jeweils eine zylinderförmige Erhebung 21 und eine zylinderförmige Bohrung 22 auf, wobei jede zylinderförmige Erhebung 21 eines Glieds 5 eine jeweilige zylinderförmige Bohrung 22 des benachbarten Glieds 5 eingreift. Dadurch sind die Glieder 5 rotierbar aneinandergelagert. Es ist somit vorgesehen, dass einerseits die Erhebungen 21 eine Rotationsachse 100 definieren, andererseits die Bohrungen 22. Die jeweilige Rotationsachse 100 entspricht dabei den Mittelachsen der Erhebungen 21 oder Bohrungen 22 eines Glieds 2. Da jedes Glied 5 an zwei benachbarten Gliedern 5 angeordnet ist, ist somit durch die Bohrungen 22, in die Erhebungen 21 des benachbarten Glieds 5 eingreifen, eine erste Rotationsachse 100 definiert, während durch die Erhebungen 21 des Glieds 5, die in Bohrungen 21 eines anderen benachbarten Glieds 5 eingreifen, eine zweite Rotationsachse 100 definiert ist. Das zuvor beschriebene Gegenüberliegen der ersten Kontaktfläche 14 und der dritten Kontaktfläche 23 sowie der zweiten Kontaktfläche 15 und der vierten Kontaktfläche 24 erfolgt daher relativ zu den jeweiligen Rotationsachsen 100.

Das Anfangsglied 25 und das Endglied 26 sind an jeweils ein benachbartes Glied 5 auf dieselbe Weise angebunden, wie die Glieder 5 untereinander. Dies bedeutet insbesondere, dass das Anfangsglied 25 Bohrungen 22 aufweist, in die Erhebungen 21 eines Glieds 5 eingreifen können. Auch weist das Anfangsglied 25 die zweite Kontaktfläche 15, die vierte Kontaktfläche 24 und die Ausnehmung 20 auf.

Das Endglied 26 weist vorteilhafterweise Erhebungen 21 zum Eingreifen in Bohrungen 22 eines benachbarten Glieds 5 auf. Außerdem weist das Endglied 26 die erste Kontaktfläche 14 und die dritte Kontaktfläche 23 auf. Besonders vorteilhaft ist außerdem zumindest ein Verriegelungselement 4 an dem Endglied 26 angebracht.

Jeder Schenkel 12, 13 weist vorteilhafterweise außerdem ein Verriegelungselement 4 wie zuvor beschrieben auf. Das Verriegelungselement 4 weist wiederum einen Blockierbereich 17 auf, der zum Blockieren einer relativen Rotation benachbarter Glieder 5 ausgebildet ist. Dabei ist vorgesehen, dass der Blockierbereich 17 an einem distalen Endbereich eines Federarms 19 angebracht ist. Der Federarm 19 dient zum Anbinden des Verriegelungselements 4 an den jeweiligen Schenkel 12, 13 und/oder an dem Verbindungselement 9 des Glieds 5. Der Federarm 19 ist somit an seinem proximalen Ende an dem ersten Schenkel 12 und/oder dem Verbindungselement 9 angebracht, oder ist an seinem proximalen Ende an dem zweiten Schenkel 13 und/oder dem Verbindungselement 9 angebracht. Somit kann der Blockierbereich 17 aus dem Freiraum 16, und damit insbesondere auch aus der Ausnehmung 20, herausbewegt werden, um die relative Rotation benachbarter Glieder 5 freizugeben. Ist der Blockierbereich 17 aus dem Freiraum 16 und aus der Ausnehmung 20 herausbewegt, so wirkt aufgrund der elastischen Verformung des Federarms 19 eine elastische Rückstellkraft auf den Blockierbereich 17, durch die der Blockierbereich 17 zurück in den Freiraum 16 und die Ausnehmung 20 gedrängt wird. Somit erfolgt eine Blockade der benachbarten Glieder 5 sobald sich die Kettengliedvorrichtung in einer geradlinigen Anordnung befindet.

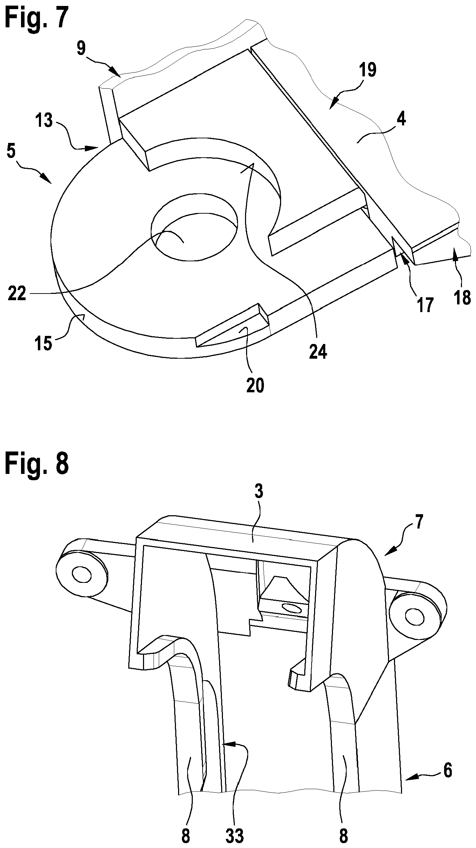

Zum Bewegen des Blockierbereichs ist ein abgeschrägter Erhebungsbereich 18 vorgesehen, der an dem Federarm 19 distal von dem Blockierbereich 17 angebracht ist. Der Erhebungsbereich 18 ist zum Zusammenwirken mit einem Betätigungselement 8 (siehe Figuren 3 und 8) des Führungselements 3 ausgebildet. Das Betätigungselement 8 ist insbesondere an dem Umlenkbereich 7 des Führungselements 3 angebracht. Wird ein Glied 5 in den Umlenkbereich 7 des Führungselements 3 eingeschoben, so wird das Verriegelungselement 4 betätigt, indem der Erhebungsbereich 18 von dem Betätigungselement 8 verschoben wird. Dies ist schematisch insbesondere in Figur 9 dargestellt, die linksseitig die normale Anordnung des Glieds 5 darstellt und rechtsseitig die Anordnung des Glieds 5, wenn das Betätigungselement 8 den Erhebungsbereich 18 verschiebt.

Durch das Verschieben des Erhebungsbereichs 18 erfolgt ein Herausbewegen des Blockierbereichs 17 aus dem Freiraum 16 und der Ausnehmung 20, sodass die relative Rotation freigegeben ist. Gleichzeitig wird eine elastische Rückstellkraft durch den Federarm 19 generiert. Aufgrund der Abschrägung des Erhebungsbereichs 18 kann eine zuverlässige Verschiebung erfolgen. Der Federarm 19 erzeugt aufgrund der Verschiebung des Erhebungsbereichs 18 eine elastische Rückstellkraft, sodass der Federarm 19 den Blockierbereich 17 zurück in den Freiraum 16 und in die Ausnehmung 20 drückt, wenn das Glied 5 den Umlenkbereich verlässt, und dadurch die Betätigungselemente 8 die Erhebungsbereiche 18 nicht mehr verschieben. Somit ist sichergestellt, dass lediglich in dem Umlenkbereich 7 eine relative Rotation benachbarter Glieder 5 ermöglicht ist, während außerhalb des Umlenkbereichs 7 stets eine starre, geradlinige Anordnung der Glieder 5 der Kettengliedvorrichtung 2 vorhanden ist. Somit ist die Stütze 1 einerseits platzsparend einfahrbar und ausfahrbar, andererseits können sicher und zuverlässig hohe Abstützkräfte übertragen werden.

In dem beschriebenen ersten Ausführungsbeispiel ist die Stütze 1 durch einen Spindeltrieb mittels der Gewindestange 28 angetrieben. Die Gewindestange 28 ist durch den Drehmomentaufnahmebereich 34 antreibbar. Es ist ebenso möglich, dass die Gewindestange 28 mittels eines Motors angetrieben ist. Außerdem ist ein zweites Ausführungsbeispiel der Stütze 1 in Figuren 10 und 11 dargestellt, bei dem ein alternatives Antriebskonzept verwendet wird.

Grundsätzlich ist in dem zweiten Ausführungsbeispiel der Stütze 1 der Aufbau der Kettengliedvorrichtung 2 identisch wie im ersten Ausführungsbeispiel, wobei keine Gewindestange 28 vorgesehen ist. Ebenso weist das Führungselement 3 einen Aufbewahrungsbereich 6 und einen Umlenkbereich 7 identisch zu dem ersten Ausführungsbeispiel auf. In dem zweiten Ausführungsbeispiel verläuft zwischen dem Anfangsglied 25 und dem Endglied 26 ein Riemen 29. Der Riemen 29 ist dazu an Riemenbefestigungselementen 31 des Anfangsglieds 26 und des Endglieds 27 befestigt. Außerdem verläuft der Riemen 29 durch eine Antriebseinheit 30, die zum Antreiben des Riemens 29 vorgesehen ist. Die Antriebseinheit 30 ist an dem Führungselement 3 angebracht. Wird der Riemen 29 angetrieben, so erfolgt ein Verschieben des Riemens 29 relativ zu dem Führungselement 3 und damit ein Bewegen der Kettengliedvorrichtung 2 relativ zu dem Führungselement 3. Dadurch lässt sich die Stütze 1 durch die Antriebseinheit 30 selbstständig einfahren und ausfahren.

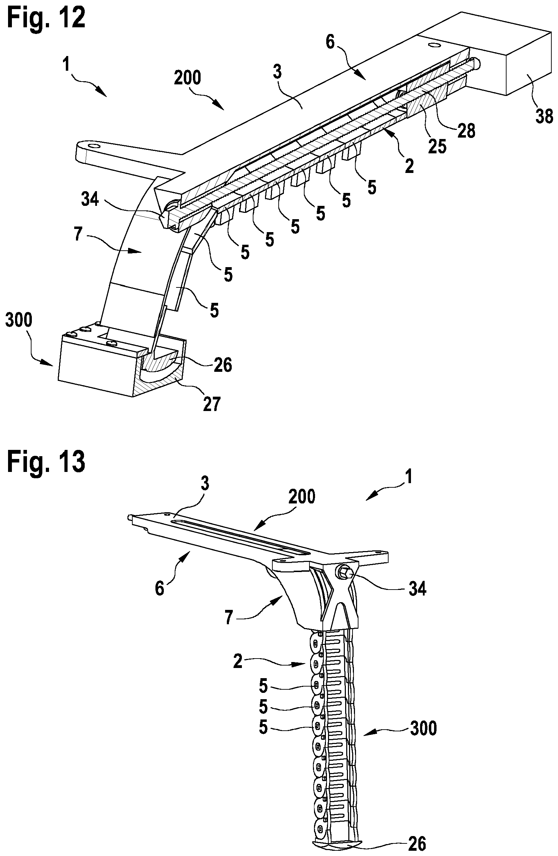

Figur 12 zeigt schematisch eine Stütze 1 gemäß einem dritten Ausführungsbeispiel der Erfindung. Dies ist im Wesentlichen identisch zu dem ersten Ausführungsbeispiel, wobei zusätzlich ein Rückseitenmotor 38 vorhanden ist. Dieser ist auf einer dem Drehmomentaufnahmebereich 34 gegenüberliegenden Seite der Gewindestange 28 angeordnet. Somit ist eine Motorisierung der Bewegung der Kettengliedvorrichtung 2 ermöglicht. Dennoch kann weiterhin über den Drehmomentaufnahmebereich 34 manuell ein Verstellen der Stütze 1 erreicht werden.

Figur 13 zeigt schematisch eine Stütze 1 gemäß einem vierten Ausführungsbeispiel der Erfindung. Der Grundaufbau der Stütze 1 ist im vierten Ausführungsbeispiel im Wesentlichen identisch zu dem ersten Ausführungsbeispiel, wobei ein Unterschied vor allem in der Kettengliedvorrichtung 2 und dem Verriegelungselement 4 besteht. In Figur 13 ist die Kettengliedvorrichtung 26 in einem Zustand dargestellt, in dem diese maximal aus dem Führungselement 3 herausbewegt und in der Abstützposition 300 angeordnet ist.

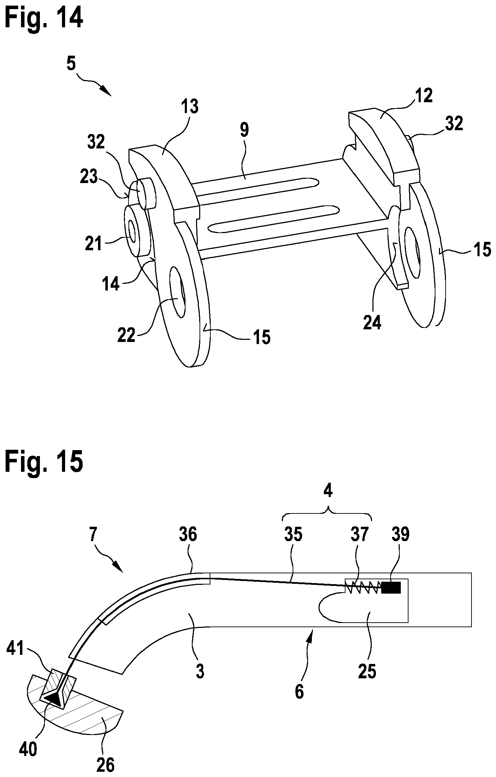

Figur 14 zeigt schematisch ein Glied 5 der Kettengliedvorrichtung 2. Im Unterschied zu dem ersten Ausführungsbeispiel weist das Glied 5 kein Verriegelungselement 4 auf. Des Weiteren bilden der erste Schenkel 12, der zweite Schenkel 13 und das Verbindungselement 9 eine H-Form, bei der das Verbindungselement 9 mittig an dem ersten Schenkeln 12 und dem zweiten Schenkel 13 angeordnet ist, nicht aber am Rand wie im ersten Ausführungsbeispiel.

Das Zusammenwirken von Erhebungen 21 und Bohrungen 22, von erster Kontaktfläche 14 und dritter Kontaktfläche 23, sowie von zweiter Kontaktfläche 15 und vierter Kontaktfläche 24 ist identisch zu dem ersten Ausführungsbeispiel. Auch ist bevorzugt vorgesehen, dass die Verbindungselemente 9 wie im ersten Ausführungsbeispiel aneinander anliegen, wenn die Kettengliedvorrichtung 2 geradlinig orientiert ist. Eine Kraftübertragung erfolgt im vierten Ausführungsbeispiel aber hauptsächlich über die ersten Schenkel 12 und zweiten Schenkel 13. Die Verschiebung des Anfangsglieds 25 kann entweder über eine Gewindestange 28 oder über einen Riemen 29 wie zuvor beschrieben erfolgen.

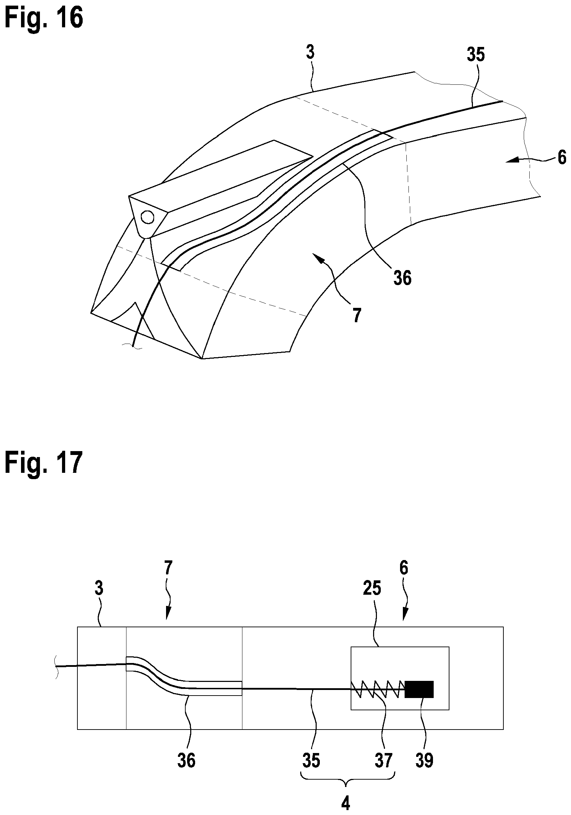

Wie in den Figuren 15, 16, und 17 dargestellt, ist in dem vierten Ausführungsbeispiel als Verriegelungselement 4 ein Kabelzug 35 vorgesehen. Der Kabelzug 35 ist durch ein Federelement 37 vorgespannt und erstreckt sich zwischen dem Anfangsglied 25 und dem Endglied 26. An dem Anfangsglied 25 ist der Kabelzug bevorzugt über ein erstes Endteil 39 und an dem Endglied 26 bevorzugt über ein zweites Endteil 40 befestigt. Zumindest an dem Umlenkbereich 7 weist das Führungselement 3 eine Aufnahme 36 auf, in dem der Kabelzug 35 verläuft.

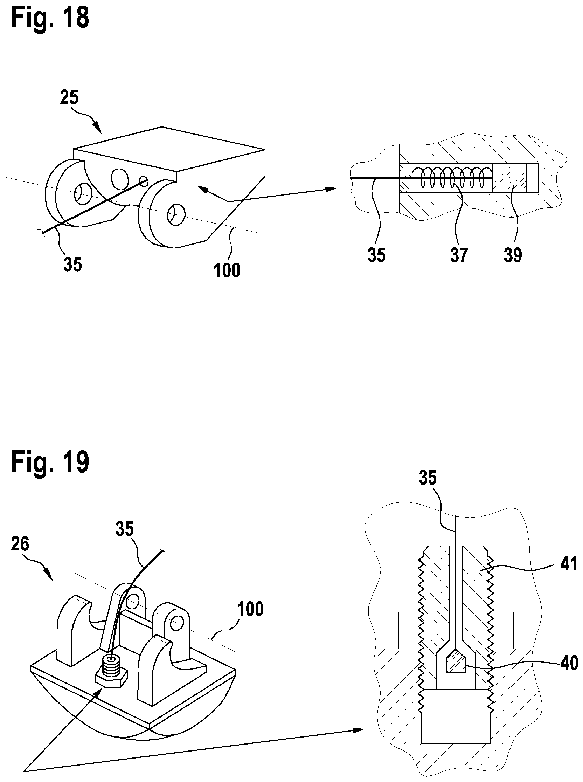

Figur 18 zeigt eine schematische Detailansicht der Befestigung des Kabelzugs 35 an dem Anfangsglied 25 und Figur 19 zeigt eine schematische Detailansicht der Befestigung des Kabelzugs 35 an dem Endglied 26. In beiden Fällen ist der Kabelzug 35 mit einem Abstand zu der Rotationsachse 100 angeordnet, sodass ein Drehmoment auf die Glieder 5 der Kettengliedvorrichtung 2 aufgebracht wird, wenn der Kabelzug 35 unter Vorspannung steht. Die Vorspannung wird durch die Befestigung des Kabelzugs 35 am Anfangsglied 25 erreicht, indem zwischen dem ersten Endteil 39 des Kabelzugs 35 und dem Anfangsglied 25 das Federelement 37 angeordnet ist, durch das der Kabelzug 35 unter Zugspannung gesetzt ist. Am Endglied 26 ist das zweite Endteil 40 des Kabelzugs 35 an einem Einstellelement 41 befestigt, das eine Einstellung der Vorspannung des Kabelzugs 35 erlaubt. Selbstverständlich können die spezifischen Befestigungen des Kabelzugs 35 am Anfangsglied 25 und am Endglied 26 auch getauscht werden. Bei dem Kabelzug 35 handelt es sich besonders vorteilhaft um ein Stahlseil.

Durch den Kabelzug 35 ist aufgrund dessen Vorspannung durch das Federelement 37 ein Drehmoment auf die Glieder 5 der Kettengliedvorrichtung 2 aufgebracht, durch die die Glieder 5 in die geradlinige Stellung gedrängt sind. Daher ist insbesondere in der in Figur 13 gezeigten maximal ausgefahrenen Stellung ein Ausknicken der Kettengliedvorrichtung 2 verhindert oder zumindest erschwert.

Bezüglich aller Ausführungsbeispiele ist vorteilhaft, wenn die geradlinigen Anordnungen der Kettengliedvorrichtung 2 in Aufbewahrungsposition 200 und in Abstützposition 300 einen Winkel von maximal 110° zueinander einnehmen. Bevorzugt ist ein Winkel von 93° zwischen der Abstützposition 300 und der Aufbewahrungsposition 200 vorgesehen. In diesem Fall ist insbesondere eine Tragkraft der Stütze 1 optimiert.

Eine Wandstärke des ersten Schenkels 12 und/oder zweiten Schenkels 13 beträgt bevorzugt zwischen 3 mm und 5 mm, insbesondere 4 mm. Eine Wandstärke des Verbindungselements 9 beträgt bevorzugt zwischen 2 mm und 4 mm, insbesondere 3 mm. Dadurch lässt sich ein geringes Gewicht der Stütze 1 erreichen.

Die Ausgestaltung der Kettengliedvorrichtung 2 und des Verriegelungselement 4 sowie die Ausgestaltung des Antriebskonzepts können in einem weiteren Ausführungsbeispiel auch beliebige Kombinationen der im ersten Ausführungsbeispiel, im zweiten Ausführungsbeispiel, im dritten Ausführungsbeispiel und im vierten Ausführungsbeispiel dargestellten Varianten sein.

Es wurde beispielhaft die Verwendung der Stütze 1 an einem Wohnwagen 10 beschrieben. Die Stütze 1 kann ebenso an anderen Gegenständen verwendet werden, die gegenüber einem Untergrund abstützbar sind.

Neben der vorstehenden schriftlichen Beschreibung der Erfindung wird zu deren ergänzender Offenbarung hiermit explizit auf die zeichnerische Darstellung der Erfindung in den Fig. 1 bis 11 Bezug genommen.

### Bezugszeichenliste

- 1: Stütze
- 2: Kettengliedvorrichtung
- 3: Führungselement
- 4: Verriegelungselement
- 5: Glied der Kettengliedvorrichtung 2
- 6: Aufbewahrungsbereich des Führungselements 3
- 7: Umlenkbereich des Führungselements 3
- 8: Betätigungselement
- 9: Verbindungselement des Glieds 5
- 10: Wohnwagen
- 11: Untergrund
- 12: erste Schenkel des Glieds 5
- 13: zweiter Schenkel des Glieds 5
- 14: erste Kontaktfläche
- 15: zweite Kontaktfläche
- 16: Freiraum
- 17: Blockierteil des Verriegelungselements 4
- 18: Erhebungsbereich des Verriegelungselements 4
- 19: Federarm des Verriegelungselements 4
- 20: Ausnehmung
- 21: Erhebung
- 22: Bohrung
- 23: dritte Kontaktfläche
- 24: vierte Kontaktfläche
- 25: Anfangsglied
- 26: Endglied
- 27: Fuß
- 28: Gewindestange
- 29: Riemen
- 30: Antriebseinheit
- 31: Riemenbefestigungselement
- 32: erstes Führungsbereich (Vorsprung)
- 33: zweites Führungsbereich (Nut)
- 34: Drehmomentaufnahmebereich
- 35: Kabelzug
- 36: Aufnahme
- 37: Federelement
- 38: Rückseitenmotor
- 39: erstes Endteil
- 40: zweites Endteil
- 41: Einstellelement
- 100: Rotationsachse
- 200: Aufbewahrungsposition

- 300: Abstützposition

## Patentansprüche

1. Stütze (1) zum Abstützen eines Gegenstands, insbesondere eines Wohnwagens (10) oder Reisemobils, gegenüber einem Untergrund (11), die Stütze (1) aufweisend
• eine Kettengliedvorrichtung (2) mit mehreren verbundenen und aneinander rotierbar gelagerten Gliedern (5), und
• ein an dem Gegenstand befestigbares Führungselement (3) zur Führung der Kettengliedvorrichtung (2),
• wobei das Führungselement (3) einen Aufbewahrungsbereich (6) und einen an den Aufbewahrungsbereich (6) anschließenden Umlenkbereich (7) aufweist,
• wobei zumindest ein Teilbereich der Kettengliedvorrichtung (2) zwischen einer Aufbewahrungsposition (200) in dem Aufbewahrungsbereich (6) und einer Abstützposition (300) außerhalb des Führungselements (3) bewegbar ist,
• wobei Glieder (5) zumindest in der Abstützposition (300) geradlinig angeordnet sind,
• wobei die Kettengliedvorrichtung (2) über den Umlenkbereich (7) aus dem Aufbewahrungsbereich (6) herausführbar ist, sodass die Kettengliedvorrichtung (2) in der Abstützposition (300) gegenüber der Aufbewahrungsposition (200) abgewinkelt ist, und
• wobei die Stütze (1) zumindest ein Verriegelungselement (4) aufweist, durch das ein Rotieren zweier Glieder (5) relativ zueinander verhindert ist und/oder durch das ein Drehmoment auf die Glieder (5) aufgebracht ist, das die Glieder (5) in die geradlinige Anordnung drängt.

2. Stütze (1) nach Anspruch 1, **dadurch gekennzeichnet, dass** die Glieder (5) der Kettengliedvorrichtung (2) jeweils einen ersten Schenkel (12) und einen zweiten Schenkel (13) aufweisen, die durch ein Verbindungselement (9) verbunden sind, wobei jeweils die ersten Schenkel (12) und zweiten Schenkel (13) benachbarter Glieder (5) aneinander rotierbar gelagert sind.

3. Stütze (1) nach einem Anspruch 2, **dadurch gekennzeichnet, dass** der erste Schenkel (12) und/oder der zweite Schenkel (13) sowohl eine zylinderförmige Erhebung (21) als auch eine zylinderförmige Bohrung (22) aufweisen, wobei jede zylinderförmige Erhebung eines Glieds (5) in eine jeweilige zylinderförmige Bohrung (22) des benachbarten Glieds (5) eingreift, um die Glieder (5) rotierbar aneinander zu lagern.

4. Stütze nach Anspruch 2 oder 3, **dadurch gekennzeichnet, dass** die Verbindungselemente (9) benachbarter Glieder (5) aneinander anliegen, wenn die Glieder (5) geradlinig angeordnet sind.

5. Stütze (1) nach einem der Ansprüche 2 bis 4, **dadurch gekennzeichnet, dass** eine Wandstärke des ersten Schenkels (12) und/oder zweiten Schenkels (13) zwischen 3 mm und 5 mm, insbesondere 4 mm und/oder eine Wandstärke des Verbindungselement (9) eine Wandstärke zwischen 2 mm und 4 mm, insbesondere 3 mm, beträgt.

6. Stütze (1) nach einem der vorhergehenden Ansprüche, **dadurch gekennzeichnet, dass** zumindest ein Teil der Glieder (5) jeweils zumindest einen ersten Führungsbereich (32) und das Führungselement (3) zumindest einen zweiten Führungsbereich (33) aufweist, wobei der erste Führungsbereich (32) und der zweite Führungsbereich (33) ineinandergreifen, um eine die Glieder (5) entlang des Führungselements (3) zu führen.

7. Stütze (1) nach einem der vorhergehenden Ansprüche, **dadurch gekennzeichnet, dass** die Kettengliedvorrichtung (2) ein Anfangsglied (25), das sich bevorzugt stets innerhalb des Führungselements (3) befindet, und/oder ein Endglied (26), das sich bevorzugt stets außerhalb des Führungselements (2) befindet und an dem einen Fuß (27) zum Aufsetzten auf den Untergrund (11) befestigt ist, aufweist.

8. Stütze nach Anspruch 6, **dadurch gekennzeichnet, dass** Anfangsglied (25) an eine Gewindestange (28) gekoppelt ist, wobei durch Rotation der Gewindestange (28) das Anfangslied (25) innerhalb des Führungselements (2) verschiebbar ist, und wobei vorteilhafterweise die Gewindestange (28), insbesondere mit Ausnahme eines Drehmomentaufnahmebereichs (34), vollständig innerhalb des Führungselements (3) verläuft, oder dass zwischen Anfangsglied (25) und Endglied (26) ein Riemen (29) befestigt ist, der von einer an dem Führungselement (3) angebrachten Antriebseinheit (30), insbesondere einem Elektromotor, antreibbar ist, um die Kettengliedvorrichtung (2) relativ zu dem Führungselement (3) zu verschieben.

9. Stütze (1) nach Anspruch 7 oder 8, **dadurch gekennzeichnet, dass** das Verriegelungselement (4) einen Kabelzug (35) aufweist, der mit einer Vorspannung zwischen dem Anfangsglied (25) und dem Endglied (26) verläuft, sodass durch die Vorspannung des Kabelzugs (35) das Drehmoment auf die Glieder (5) wirkt, das die Glieder (5) in die geradlinige Anordnung drängt.

10. Stütze (1) nach Anspruch 9, **dadurch gekennzeichnet, dass** das Führungselement (3) eine Aufnahme (36) für den Kabelzug (35) aufweist, sodass der Kabelzug (35) zumindest in dem Umlenkbereich (7) in der Aufnahme (36) verläuft.

11. Stütze (1) nach Anspruch 9 oder 10, **dadurch gekennzeichnet, dass** das Verriegelungselement (4) ein Federelement (37) aufweist, wobei der Kabelzug (35) über das Federelement (37) an dem Anfangsglied (25) oder dem Endglied (26) befestigt ist, und wobei durch das Federelement (37) die Vorspannung erzeugt ist.

12. Stütze (1) nach einem der vorhergehenden Ansprüche, **dadurch gekennzeichnet, dass** jedes Glied (5) eine erste Kontaktfläche (14), eine zweite Kontaktfläche (15), eine dritte Kontaktfläche (23) und eine vierte Kontaktfläche (24) aufweist,
• wobei die erste Kontaktfläche (14) jedes Glieds (5) zumindest abschnittsweise an der zweiten Kontaktfläche (15) des benachbarten Glieds (5) anliegt
• wobei die dritte Kontaktfläche (23) jedes Glieds (5) zumindest abschnittsweise an der vierten Kontaktfläche (24) des benachbarten Glieds (5) anliegt,
• wobei die erste Kontaktfläche (14) und die dritte Kontaktfläche (23) kreisbogenförmig um eine Rotationsachse (100) zweier benachbarter Glieder (5) ausgebildet sind,
• wobei die zweite Kontaktfläche (15) zumindest abschnittsweise komplementär zu der ersten Kontaktfläche (14) und die vierte Kontaktfläche (24) zumindest abschnittsweise komplementär zu der dritten Kontaktfläche (23) ausgebildet ist,
• wobei die erste Kontaktfläche (14), die zweite Kontaktfläche (15), die dritte Kontaktfläche (23) und die vierte Kontaktfläche (24) getrennt voneinander sind,
• wobei die erste Kontaktfläche (14) und die dritte Kontaktfläche (23) relativ zu der jeweiligen Rotationsachse (100) zumindest bereichsweise gegenüberliegend angeordnet sind, und
• wobei die zweite Kontaktfläche (15) und die vierte Kontaktfläche (24) relativ zu der jeweiligen Rotationsachse (100) zumindest bereichsweise gegenüberliegend angeordnet sind.

13. Stütze (1) nach Anspruch 12, **dadurch gekennzeichnet, dass** die erste Kontaktfläche (14) abschnittsweise von der zweiten Kontaktfläche (15) des benachbarten Glieds (5) zur Bildung eines Freiraums (16) beabstandet ist,
• wobei an jedem Glied (5) ein Verriegelungselement (4) angeordnet ist,
• wobei ein Blockierbereich (17) des Verriegelungselements (4) in den Freiraum (16) eingreift, um eine relative Rotation zwischen den benachbarten Gliedern (5) zu blockieren,
• wobei der Blockierbereich (17) des Verriegelungselements (4) aus dem Freiraum (16) herausbewegbar ist, um eine relative Rotation zwischen den benachbarten Gliedern (5) freizugeben, wobei auf das Verriegelungselement (4) eine den Blockierbereich (17) in den Freiraum (16) zurückdrängende elastische Rückstellkraft wirkt,
• wobei das Verriegelungselement (4) einen Federarm (19) aufweist, über den der Blockierbereich (17) federnd an dem Glied (5) angebracht ist, wobei das Herausbewegen des Blockierbereichs (17) aus dem Freiraum (16) zu einer elastischen Verformung des Federarms (19) führt,
• wobei der Umlenkbereich (7) des Führungselements (3) ein Betätigungselement (8) aufweist, durch das der Blockierbereich (17) jedes Verriegelungselements (4) aus dem Freiraum (16) herausbewegbar ist, und
• wobei insbesondere das Verriegelungselement (4) einen abgeschrägten Erhebungsbereich (18) aufweist, der von dem Betätigungselement (8) des Führungselements (3) verschiebbar ist, um den Blockierbereich (17) aus dem Freiraum (16) herauszubewegen.

14. Stütze (1) nach Anspruch 13, **dadurch gekennzeichnet, dass** jedes Glied (5) eine Ausnehmung (20) aufweist, die zur zumindest teilweisen Aufnahme des Blockierbereichs (17) des Verriegelungselements (4) eines benachbarten Glieds (5) ausgebildet ist, wenn die Glieder (5) geradlinig orientiert sind.

15. Wohnwagen (10) aufweisend zumindest eine Stütze (1) nach einem der vorhergehenden Ansprüche zum Abstützen des Wohnwagens (10) gegenüber dem Untergrund (11), auf dem der Wohnwagen (10) steht.

## Claims

1. A support (1) for supporting an object, preferably a caravan (10) or motorhome, against a ground (11), the support (1) comprising
- a chain link device (2) with multiple links (5), which are connected and arranged to be rotatable relative to each other, and
- a guiding element (3) attachable to the object for guiding the chain link device (2),
- wherein the guiding element (3) comprises a storage portion (6) and a deflection portion (7) joining the storage portion (6),
- wherein at least a partial portion of the chain link device (2) is movable between a storage position (200) in the storage portion (6) and a supporting position (300) outside the guiding element (3),
- wherein links (5) are arranged rectilinearly at least in the supporting position (300),
- wherein the chain link device (2) can be guided out of the storage portion (6) via the deflection portion (7), so that the chain link device (2) in the supporting position (300) is angled relative to the storage position (200), and
- wherein the support (1) comprises at least one locking element (4), via which a rotation of two links (5) relative to each other is prevented and/or via which a torque is applied to the links (5), which forces the links (5) into the rectilinear arrangement.

2. The support (1) according to claim 1, **characterized in that** the links (5) of the chain link device (2) each comprise a first leg (12) and a second leg (13), which are connected by a connecting element (9), wherein the first legs (12) and second legs (13) of neighboring links (5) are each arranged to be rotatable relative to each other.

3. The support (1) according to a claim 2, **characterized in that** the first leg (12) and/or the second leg (13) comprise both a cylindrical protrusion (21) and a cylindrical aperture (22), wherein each cylindrical protrusion of a link (5) engages a respective cylindrical aperture (22) of the neighboring link (5) to arrange the links (5) to be rotatable relative to each other.

4. The support according to claim 2 or 3, **characterized in that** the connecting elements (9) of neighboring links (5) abut each other, when the links (5) are arranged rectilinearly.

5. The support (1) according to any of the claims 2 to 4, **characterized in that** a wall thickness of the first leg (12) and/or second leg (13) is between 3 mm and 5 mm, in particular 4 mm, and/or a wall thickness of the connecting element (9) is between 2 mm and 4 mm, in particular 3 mm.

6. The support (1) according to any of the preceding claims, **characterized in that** at least a part of the links (5) each comprises at least a first guiding portion (32) and the guiding element (3) comprises at least a second guiding portion (33), wherein the first guiding portion (32) and the second guiding portion (33) engage with each other to guide one of the links (5) along the guiding element (3).

7. The support (1) according to any of the preceding claims, **characterized in that** the chain link device (2) comprises a beginning link (25), which is preferably always located inside the guiding element (3), and/or an end link (26), which is preferably always located outside the guiding element (2) and to which a foot (27) is fixed for placing on the ground (11).

8. The support according to claim 6, **characterized in that** beginning link (25) is coupled to a threaded rod (28), wherein the beginning link (25) is movable within the guiding element (2) by rotation of the threaded rod (28), and wherein preferably the threaded rod (28), in particular with the exception of a torque receiving portion (34), extends completely within the guiding element (3), or **in that** a belt (29) is fixed between the beginning link (25) and the end link (26) and can be driven by a driving unit (30) mounted to the guiding element (3), in particular an electric motor, in order to move the chain link device (2) relative to the guiding element (3).

9. The support (1) according to claim 7 or 8, **characterized in that** the locking element (4) comprises a pulling cable (35), which extends with a pretension between the beginning link (25) and the end link (26), so that, through the pretension of the pulling cable (35), the torque acts on the links (5), which forces the links (5) into the rectilinear arrangement.

10. The support (1) according to claim 9, **characterized in that** the guiding element (3) comprises a receptacle (36) for the pulling cable (35), so that the pulling cable (35) extends at least in the receptacle (36) in the deflection portion (7).

11. The support (1) according to claim 9 or 10, **characterized in that** the locking element (4) comprises a spring element (37), wherein the pulling cable (35) is fixed to the beginning link (25) or the end link (26) via the spring element (37), and wherein the pretension is generated by the spring element (37).

12. The support (1) according to any of the preceding claims, **characterized in that** each link (5) comprises a first contacting surface (14), a second contacting surface (15), a third contacting surface (23) and a fourth contacting surface (24),
- wherein the first contacting surface (14) of each link (5) at least partially abuts the second contacting surface (15) of the neighboring link (5),
- wherein the third contacting surface (23) of each link (5) at least partially abuts against the fourth contacting surface (24) of the neighboring link (5),
- wherein the first contacting surface (14) and the third contacting surface (23) are formed circularly around a rotation axis (100) of two neighboring links (5),
- wherein the second contacting surface (15) is formed at least partially complementary to the first contacting surface (14) and the fourth contacting surface (24) is formed at least partially complementary to the third contacting surface (23),
- wherein the first contacting surface (14), the second contacting surface (15), the third contacting surface (23) and the fourth contacting surface (24) are separate from each other,
- wherein the first contacting surface (14) and the third contacting surface (23) are arranged opposite to each other at least in portions relative to the respective rotation axis (100), and
- wherein the second contacting surface (15) and the fourth contacting surface (24) are arranged opposite to each other at least in portions relative to the respective rotation axis (100).

13. The support (1) according to claim 12, **characterized in that** the first contacting surface (14) is spaced in portions from the second contacting surface (15) of the neighboring link (5) to form a free space (16),
- wherein a locking element (4) is arranged on each link (5),
- wherein a blocking portion (17) of the locking element (4) engages the free space (16) to block a relative rotation between the neighboring links (5),
- wherein the blocking portion (17) of the locking element (4) is movable out of the free space (16) to release a relative rotation between the neighboring links (5), wherein the locking element (4) is acted by an elastic restoring force pushing the blocking portion (17) back into the free space (16),
- wherein the locking element (4) comprises a spring arm (19), via which the blocking portion (17) is resiliently mounted to the link (5), wherein moving the blocking portion (17) out of the free space (16) leads to an elastic deformation of the spring arm (19),
- wherein the deflection portion (7) of the guiding element (3) comprises an actuating element (8), via which the blocking portion (17) of each locking element (4) can be moved out of the free space (16), and
- wherein in particular the locking element (4) comprises a beveled protrusion portion (18), which is movable by the actuating element (8) of the guiding element (3) to move the blocking portion (17) out of the free space (16).

14. The support (1) according to claim 13, **characterized in that** each link (5) comprises a recess (20), which is formed to at least partially receive the blocking portion (17) of the locking element (4) of a neighboring link (5), when the links (5) are rectilinear oriented.

15. A caravan (10) comprising at least one support (1) according to any of the preceding claims for supporting the caravan (10) against the ground (11), on which the caravan (10) is standing.

## Revendications

1. Support (1) pour soutenir un objet, en particulier une caravane (10) ou un camping-car, par rapport à un sol (11), le support (1) présentant
- un dispositif à maillons de chaîne (2) avec plusieurs maillons (5) reliés et montés les uns sur les autres de manière à pouvoir tourner, et
- un élément de guidage (3) pouvant être fixé sur l'objet pour guider le dispositif à maillons de chaîne (2),
- dans lequel l'élément de guidage (3) présente une zone de stockage (6) et une zone de renvoi (7) située dans le prolongement de la zone de stockage (6),
- dans lequel au moins une zone partielle du dispositif à maillons de chaîne (2) peut être déplacée entre une position de stockage (200) dans la zone de stockage (6) et une position de soutien (300) à l'extérieur de l'élément de guidage (3),
- dans lequel des maillons (5) sont disposés de manière rectiligne au moins dans la position de soutien (300),
- dans lequel le dispositif à maillons de chaîne (2) peut être guidé hors de la zone de stockage (6) par l'intermédiaire de la zone de renvoi (7) si bien que le dispositif à maillons de chaîne (2) est coudé dans la position de soutien (300) par rapport à la position de stockage (200), et
- dans lequel le support (1) présente au moins un élément de verrouillage (4), par lequel une rotation de deux maillons (5) l'un par rapport à l'autre est empêchée et/ou par lequel un couple de rotation est appliqué sur les maillons (5), lequel pousse les maillons (5) dans l'agencement rectiligne.

2. Support (1) selon la revendication 1, **caractérisé en ce que** les maillons (5) du dispositif à maillons de chaîne (2) présentent respectivement une première branche (12) et une deuxième branche (13), qui sont reliées par un élément de liaison (9), dans lequel respectivement les premières branches (12) et les deuxièmes branches (13) de maillons (5) adjacents sont montées les unes sur les autres de manière à pouvoir tourner.

3. Support (1) selon la revendication 2, **caractérisé en ce que** la première branche (12) et/ou la deuxième branche (13) présentent à la fois une partie surélevée (21) cylindrique ainsi qu'un alésage (22) cylindrique, dans lequel chaque partie surélevée cylindrique d'un maillon (5) vient en prise avec un alésage (22) cylindrique respectif du maillon (5) adjacent pour monter les maillons (5) les uns sur les autres de manière à pouvoir tourner.

4. Support selon la revendication 2 ou 3, **caractérisé en ce que** les éléments de liaison (9) de maillons (5) adjacents reposent les uns sur les autres quand les maillons (5) sont disposés de manière rectiligne.

5. Support (1) selon l'une quelconque des revendications 2 à 4, **caractérisé en ce qu'**une épaisseur de paroi de la première branche (12) et/ou de la deuxième branche (13) est comprise entre 3 mm et 5 mm, en particulier est de 4 mm et/ou une épaisseur de paroi de l'élément de liaison (9) est comprise entre 2 mm et 4 mm, en particulier est de 3 mm.

6. Support (1) selon l'une quelconque des revendications précédentes, **caractérisé en ce qu'**au moins une partie des maillons (5) présente respectivement au moins une première zone de guidage (32) et l'élément de guidage (3) présente au moins une deuxième zone de guidage (33), dans lequel la première zone de guidage (32) et la deuxième zone de guidage (33) s'imbriquent l'une dans l'autre pour guider les maillons (5) le long de l'élément de guidage (3).

7. Support (1) selon l'une quelconque des revendications précédentes, **caractérisé en ce que** le dispositif à maillons de chaîne (2) présente un maillon de début (25), qui se trouve de manière préférée systématiquement à l'intérieur de l'élément de guidage (3), et/ou un maillon de fin (26), qui se trouve de manière préférée systématiquement à l'extérieur de l'élément de guidage (2) et est fixé sur un pied (27) destiné à être placé sur le sol (11).

8. Support selon la revendication 6, **caractérisé en ce que** le maillon de début (25) est couplé à une tige filetée (28), dans lequel le maillon de début (25) peut être coulissé à l'intérieur de l'élément de guidage (2) par la rotation de la tige filetée (28), et dans lequel avantageusement la tige filetée (28) s'étend en totalité, en particulier à l'exception d'une zone d'absorption de couple de rotation (34), à l'intérieur de l'élément de guidage (3), ou qu'est fixée entre le maillon de début (25) et le maillon de fin (26) une courroie (29), qui peut être entraînée par une unité d'entraînement (30) installée sur l'élément de guidage (3), en particulier un moteur électrique pour faire coulisser le dispositif à maillons de chaîne (2) par rapport à l'élément de guidage (3).

9. Support (1) selon la revendication 7 ou 8, **caractérisé en ce que** l'élément de verrouillage (4) présente un câble Bowden (35) qui s'étend avec une précontrainte entre le maillon de début (25) et le maillon de fin (26) si bien que du fait de la précontrainte du câble Bowden (35), le couple de rotation qui pousse les maillons (5) dans l'agencement rectiligne agit sur les maillons (5).

10. Support (1) selon la revendication 9, **caractérisé en ce que** l'élément de guidage (3) présente un logement (36) pour le câble Bowden (35) si bien que le câble Bowden (35) s'étend au moins dans la zone de renvoi (7) dans le logement (36).

11. Support (1) selon la revendication 9 ou 10, **caractérisé en ce que** l'élément de verrouillage (4) présente un élément de ressort (37), dans lequel le câble Bowden (35) est fixé par l'intermédiaire de l'élément de ressort (37) sur le maillon de début (25) ou sur le maillon de fin (26), et dans lequel la précontrainte est produite par l'élément de ressort (37).

12. Support (1) selon l'une quelconque des revendications précédentes, **caractérisé en ce que** chaque maillon (5) présente une première surface de contact (14), une deuxième surface de contact (15), une troisième surface de contact (23) et une quatrième surface de contact (24),
- dans lequel la première surface de contact (14) de chaque maillon (5) repose au moins par sections sur la deuxième surface de contact (15) du maillon (5) adjacent
- dans lequel la troisième surface de contact (23) de chaque maillon (5) repose au moins par sections sur la quatrième surface de contact (24) du maillon (5) adjacent,
- dans lequel la première surface de contact (14) et la troisième surface de contact (23) sont réalisées en forme d'arc de cercle autour d'un axe de rotation (100) de deux maillons (5) adjacents,
- dans lequel la deuxième surface de contact (15) est réalisée au moins par sections de manière complémentaire à la première surface de contact (14) et la quatrième surface de contact (24) est réalisée au moins par sections de manière complémentaire par rapport à la troisième surface de contact (23),
- dans lequel la première surface de contact (14), la deuxième surface de contact (15), la troisième surface de contact (23) et la quatrième surface de contact (24) sont séparées les unes des autres,
- dans lequel la première surface de contact (14) et la troisième surface de contact (23) sont disposées en vis-à-vis au moins par endroits par rapport à l'axe de rotation (100) respectif, et
- dans lequel la deuxième surface de contact (15) et la quatrième surface de contact (24) sont disposées au moins par endroits en vis-à-vis par rapport à l'axe de rotation (100) respectif.

13. Support (1) selon la revendication 12, **caractérisé en ce que** la première surface de contact (14) est tenue à distance par sections de la deuxième surface de contact (15) du maillon (5) adjacent pour former un espace libre (16),
- dans lequel un élément de verrouillage (4) est disposé sur chaque maillon (5),
- dans lequel une zone de blocage (17) de l'élément de verrouillage (4) vient en prise avec l'espace libre (16) pour bloquer une rotation relative entre les maillons (5) adjacents,
- dans lequel la zone de blocage (17) de l'élément de verrouillage (4) peut être déplacée hors de l'espace libre (16) pour libérer une rotation relative entre les maillons (5) adjacents, dans lequel une force de rappel élastique refoulant la zone de blocage (17) dans l'espace libre (16) agit sur l'élément de verrouillage (4),
- dans lequel l'élément de verrouillage (4) présente un bras ressort (19), par l'intermédiaire duquel la zone de blocage (17) est installée sur ressorts sur le maillon (5), dans lequel le déplacement de sortie de la zone de blocage (17) hors de l'espace libre (16) donne lieu à une déformation élastique du bras ressort (19),
- dans lequel la zone de renvoi (7) de l'élément de guidage (3) présente un élément d'actionnement (8), par lequel la zone de blocage (17) de chaque élément de verrouillage (4) peut être déplacée hors de l'espace libre (16),
- dans lequel en particulier l'élément de verrouillage (4) présente une zone de partie surélevée (18) chanfreinée, qui peut être coulissée par l'élément d'actionnement (8) de l'élément de guidage (3) pour déplacer la zone de blocage (17) hors de l'espace libre (16).

14. Support (1) selon la revendication 13, **caractérisé en ce que** chaque maillon (5) présente un évidement (20), qui est réalisé pour loger au moins en partie la zone de blocage (17) de l'élément de verrouillage (4) d'un maillon (5) adjacent, quand les maillons (5) sont orientés de manière rectiligne.

15. Caravane (10) présentant au moins un support (1) selon l'une quelconque des revendications précédentes pour soutenir la caravane (10) par rapport au sol (11), sur lequel se trouve la caravane (10).
